# EUROPEAN PATENT APPLICATION

(11) **EP 2 843 611 A1**
(43) Date of publication of application: **04.03.2015**
(21) Application number: 13461544.2
(22) Date of filing: 26.08.2013
(51) Int. Cl.: G06Q 40/02

(54) **Computer implemented method for management of standing orders**

(71) Applicant: Kosatka-Pioro, Aleksandra, 95-083 Lutomiersk (PL)
(72) Inventor: Kosatka-Pioro, Aleksandra, 95-083 Lutomiersk (PL); Pioro, Krzysztof, 95-083 Lutomiersk (PL)
(74) Representative: Pawlowski, Adam

(57) **Abstract**

The object of the invention is an innovative standing order. The invention provides functionality of a banking transactional system (implemented as a computer program), allowing execution of particular standing orders in a New, easier and more practical manner.

A computer-implemented method for management of a standing order, the method comprising the steps of defining a standing order with a default amount; accepting a request to modify the amount of an upcoming standing order iteration; allowing to change the default amount of the standing order to a new amount; executing the identified upcoming iteration of the standing order with the new modified amount.

## Description

The aim of the present invention is a computer implemented method for management of standing orders. The present invention is in the technical fields of computer systems, in particular banking systems, computer data processing and human-computer interfaces.

A standing order (or a standing instruction) is an instruction that a bank account holder ("the payer") gives to a bank to pay a set amount at regular intervals to another's ("the payee") account. The instruction is sometimes known as a banker's order (Wikipedia). Standing orders are typically used to pay rent, mortgage or other fixed regular payments.

A direct debit or direct withdrawal is a financial transaction in which one person withdraws funds from another person's bank account. Formally, the person who directly draws the funds ("the payee") instructs a bank to collect (i.e., debit) an amount directly from another's ("the payer") bank account designated by the payer and pay those funds into a bank account designated by the payee. Before the payer's banker will allow the transaction to take place, the payer must have advised the bank that the payee is authorized to directly draw the funds. It is also called pre-authorized debit (PAD) or pre-authorized payment (PAP). After the authorities are set up, the direct debit transactions are usually processed electronically. Direct debits are typically used for recurring payments, such as credit card and utility bills, where the payment amounts vary from one payment to another. However, when the authorization is in place, the circumstances in which the funds are drawn, as well as the dates and amounts, are a matter of agreement between the payee and payer, of which the bankers are not concerned (Wikipedia).

From US 20020095345 A1 there is known a standing order, which is a type of purchase order that directs a supplier to provide the customer with a desired product, good, or service in a desired quantity, at a specified price, and at a desired frequency. Once the standing order comes into effect, the supplier is authorized to deliver the desired quantity of products, goods, or services each delivery cycle without having to complete a new purchase order. The drawbacks of such solution include the requirement for either to set a fixed amount of an order or to transfer a decision regarding the amount to another entity, such as a mobile telephony service provider issuing a direct debit request based on prior agreement with a customer.

Taking into account the aforementioned prior art, there exists a need to design and implement a system and a method for management of standing orders, which shall in turn ultimately lead to optimization of resources of a computer system for handling the payments and improvements in human-computer interfaces for handling the payments.

The object of the present invention is a computer-implemented method for management of a standing order, the method comprising the steps of defining a standing order with a default amount; accepting a request to modify the amount of an upcoming standing order iteration; allowing to change the default amount of the standing order to a new amount; executing the identified upcoming iteration of the standing order with the new modified amount.

Preferably, the method further comprises a step of executing further iterations of the standing order with the default amount.

Preferably, the upcoming iteration of a standing order is the next immediate iteration or any future iteration or a number of upcoming iterations.

Preferably, the default amount of the standing order is allowed to be changed to a new amount only during a predefined time preceding the date of the transfer.

Preferably, in case the execution step is not successful, allowing to input an amount to execute an overdue standing order iteration leaving the default amount of the standing order unaltered.

Preferably, the method further comprises the step of allowing to change the default amount of the standing order to a new amount accepts the amount to be transferred as a formula.

Preferably, the method further comprises the step of defining a description formula for the standing order, the description formula comprising a variable which can be updated upon executing the standing order.

Another object of the present invention is a system for management of standing orders the system comprising an internal data bus; a local memory for storing software and data; a processor configured to execute the method according to the present invention and communicating with a standing orders database in order to create, modify, executed and archive data of standing orders; communicating with a clock module; in response to interaction of a client, generating, by means of a user interface generation module, user interface data.

The object of the present invention is also computer software comprising program code means for performing all the steps of the computer-implemented method according to the present invention when said program is run on a computer.

The object of the present invention is also a computer readable recording medium storing computer-executable instructions performing all the steps of the computer-implemented method according to the present invention when executed on a computer.

The object of the invention has been presented in an exemplary embodiment in a drawing, in which:
FIG. 1 presents a block diagram of the first embodiment of the method according to the present invention;
FIGs. 2A and 2B show an exemplary standing order editing display screen;
FIGs. 3A and 3B show an exemplary standing order editing display screen;
Fig. 4 presents a block diagram of the second embodiment of the method according to the present invention; and
Fig. 5 shows a block diagram of a system according to the present invention.

The present invention concerns in particular a standing order function with a variable amount within bank transactional systems, wherein the function is provided for individual and corporate customers.

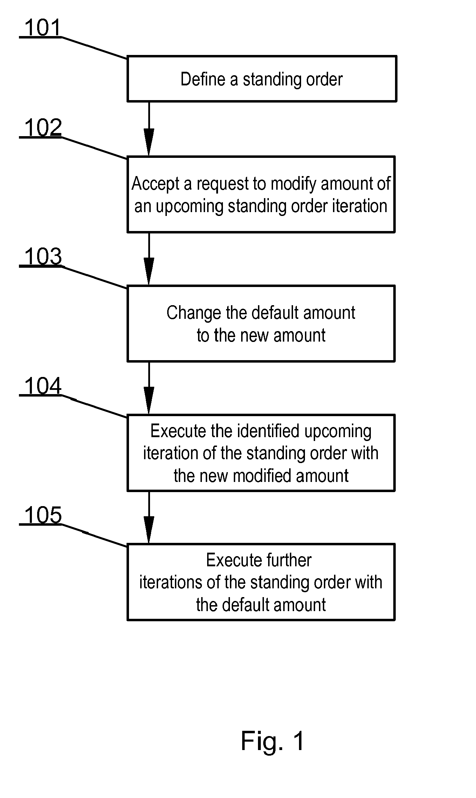

FIG. 1 presents a block diagram of the method according to the present invention. The invention aims at introducing a function allowing for defining a standing order (e.g. monthly) with a possibility of entering a variable, arbitrary amount during a period preceding execution of each wire transfer of a given standing order cycle (for example an amount explicitly given on an invoice).

The first step of the method is to define a standing order 101 with a default amount. Next, at step 102 the system accepts a request to modify amount of an upcoming standing order iteration. The upcoming iteration of a standing order may be the next immediate iteration or any future iteration or a number of upcoming iterations. For example if a standing order starts with a January, 12th payment and is to last for 6 months, The upcoming iteration on March 20^{th} may be the iteration of April 12^{th} or an iteration of May 12^{th}, or any number of iterations selected from April, May, June.

Further, at step 103, a user is allowed to change the default amount of the selected standing order to a new amount. Subsequently, at step 104, the identified upcoming iteration of the standing order is executed with the new modified amount. Lastly, at step 105, further iterations of the standing order are executed with the default amount. As explained previously, the default amount may be altered for one or more future iterations of the standing order.

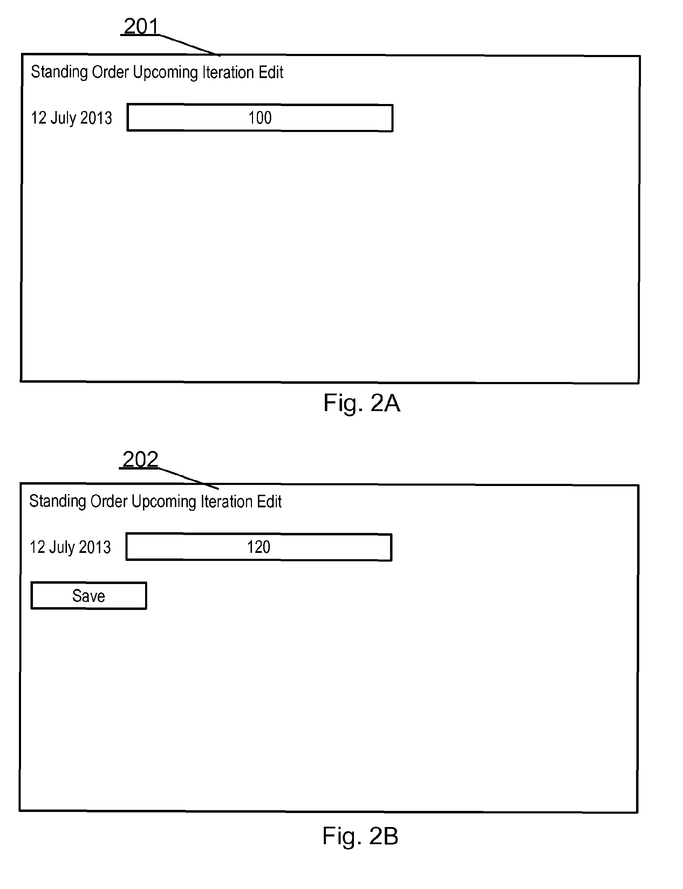

FIGs. 2A and 2B show an exemplary standing order editing display screen 201, 202. A client has set up a standing order with a default value of 100 as shown by 201. For example the standing order concerns mobile phone invoices. Such invoices present different amounts depending on actual use of telecommunication services.

The client knows that on average his mobile phone invoice is at the level of 100. therefore the default value of 100 is set. The default amount will be transferred according to a set transfer date.

However, during the preceding time from the date of the transfer, the user may set a different value. The bank system may also notify the user that unless a new value is given, the standing order will proceed according to the default value. In case the standing order has been defined without a default value, lack of a response to the notifications will result in the standing order iteration not being affected.

In case the client has received the invoice, the amount of the invoice may be entered for the next iteration of the standing order. Fig. 2B shows that the next iteration of the standing order will be changed from the default 100 (201) to a new value 120 (202).

There may also be a case where a standing order iteration has not been executed, for example due to insufficient balance on the associated bank account. In such case the user is notified accordingly and may input an amount to execute an overdue transfer without having to alter the standing order.

Hence, a valid standing order gives the user access to both future iterations and not executed past iterations of the standing order. This results in a very flexible standing order management system.

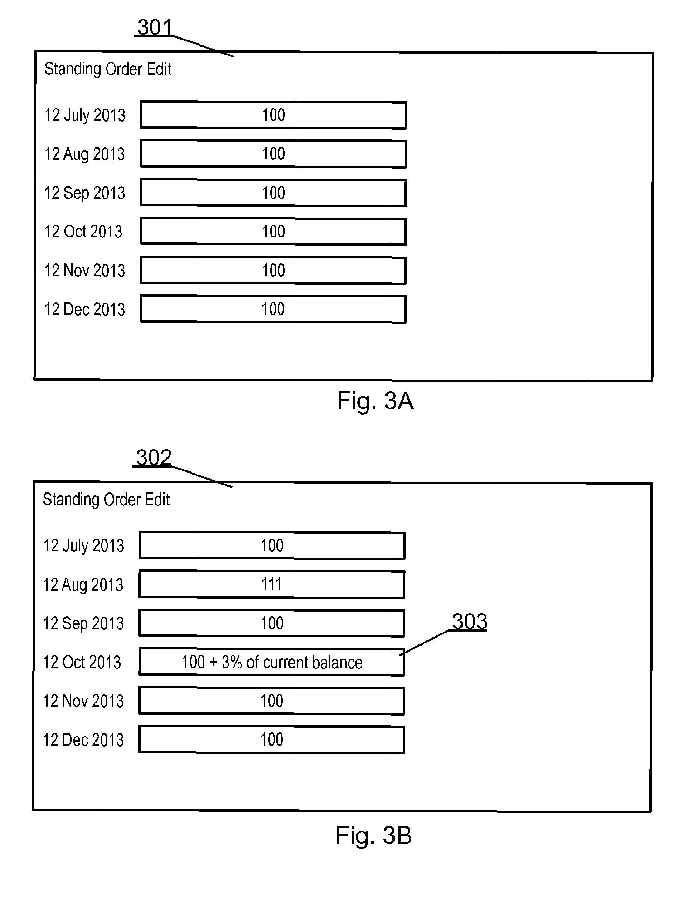

FIGs. 3A and 3B show an exemplary standing order editing display screen. Fig. 3A presents 301 upcoming iterations of a standing order. A user may alter the default value for multiple upcoming iterations of the standing order. The user may also adjust the amount to be transferred using a formula, for example a formula dependent on the current balance of the account from which the wire transfer will be made. Such an option has been shown in Fig. 3B 303. Other formulas may include a given amount + X percent of some other amount or a formula of for example 103% of previous payment.

The advantages for the clients are that the standing order system will remind of upcoming iterations of the standing orders and that in case there is a default amount of the standing order, such amount will be transferred even if the client does not know the exact amount to be paid. This secures a client from legal actions as a minor underpayment that will usually not trigger actions equal in severity to a non-payment.

Further, a client of the system according to the present invention is not required to use direct debit requests where he is deprived to a large extent of control over payments.

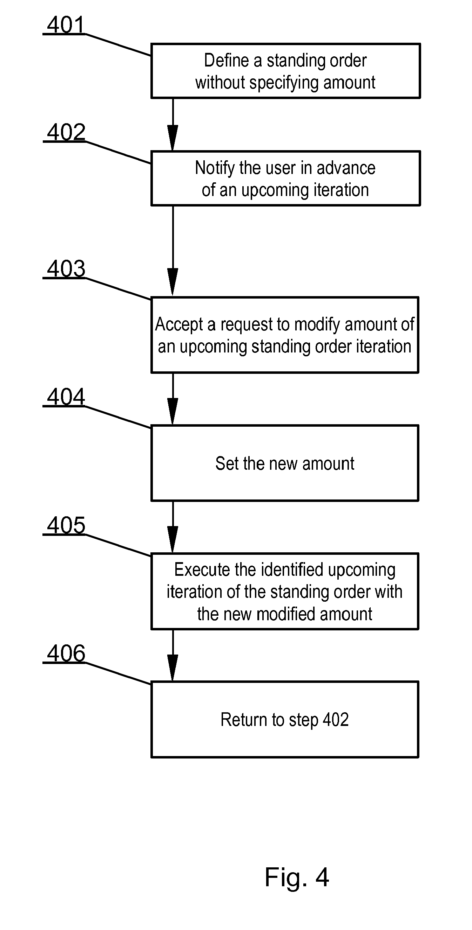

Fig. 4 presents a block diagram of the second embodiment of the method according to the present invention.

The first step of the method is to define a standing order 401 without a default amount. At step 402 sufficiently in advance a user is notified of the fact that a date of next iteration of a standing order approaches and is requested to input the amount of wire transfer. Next, at step 403 the system accepts a request to modify amount of an upcoming standing order iteration. Further, at step 404, a user is allowed to set the amount of the selected standing order iteration. Subsequently, at step 405, the identified upcoming iteration of the standing order is executed with the set. Lastly, at step 406, the method returns to monitoring the standing order against current date and returns to step 402 if needed.

In case there is an iteration of a standing order which is not executed, for example if an amount has not been provided or there are insufficient funds on the associated account, the client may execute the missing iteration of the standing order at a later time without modifying the parameters of the standing order.

In both embodiments of Fig. 1 and Fig. 4 the present system may include a feature of defining a payment's description formula. For example payment for rental of an apartment may have a payment description defined as: "apartment rental" + [current month] + " / " + [current year] (which could be executed as "apartment rental August/2013". Another example of a variable title of a payment could be: "loan " + [iteration_number] + " / " + [total_number_of_iterations] (which could be executed as "loan 8/12".

In such a case, a standing order will not have the same title for all iterations but a variable title depending on user's needs.

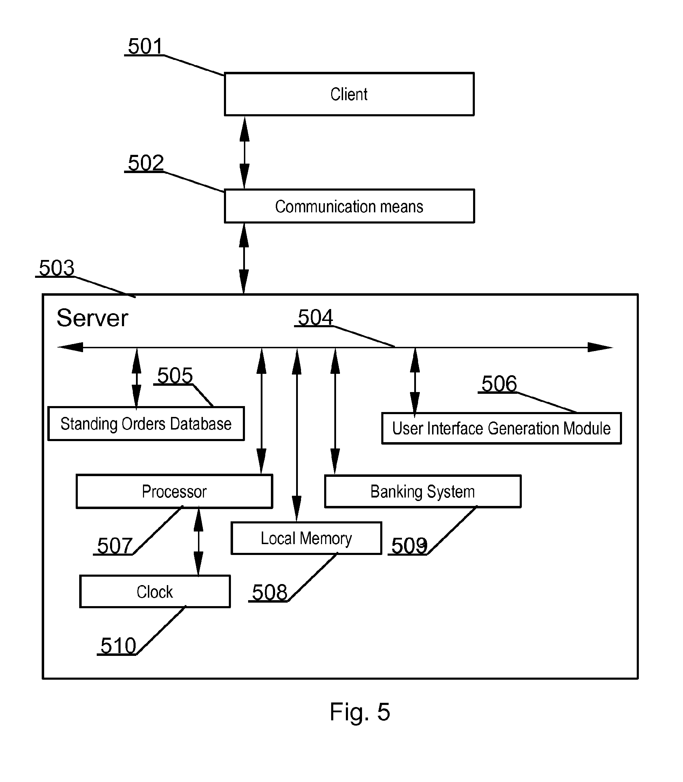

Fig. 5 shows a block diagram of a system according to the present invention. The system comprises a client 501, preferably running a client application that may have a form of an online banking application accessible via an Internet browser software. The client 501 bidirectionally communicates via a communication means 502 (such as WiFi or DSL or ISDN) with a banking system's server 503.

The banking system's server 503 comprises numerous modules effectively communicating with each other by means of an internal data bus 504. The processor 507 manages the system and executes hardware and/or software process shown in details in Figs. 1 to 4. The required software is stored in local memory 508. The processor 504 communicates with a standing orders database 505 in order to create, modify, executed and archive data of standing orders. As described with reference to Figs. 1 to 4 current time is an important feature used to decide if and how a standing order may be modified. Therefore the processor 504 communicates with a clock module 510.

The processor 504 may also be in communication with other components of the banking system 509 such as transaction and clients database. In response to interaction of the client 501 with the server 503, the server 503, by means of a user interface generation module, generates user interface data such as a webpage.

It can be easily recognized, by one skilled in the art, that the aforementioned method for management of standing orders may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A computer-implemented method for management of a standing order, the method comprising the steps of:
- defining (101) a standing order with a default amount;
- accepting (102) a request to modify the amount of an upcoming standing order iteration;
- allowing (103) to change the default amount of the standing order to a new amount;
- executing (104) the identified upcoming iteration of the standing order with the new modified amount.

2. The method of claim 1 **characterized in that** it further comprises a step of executing (105) further iterations of the standing order with the default amount.

3. The method of claim 1 **characterized in that** the upcoming iteration of a standing order is the next immediate iteration or any future iteration or a number of upcoming iterations.

4. The method of claim 1 **characterized in that** the default amount of the standing order is allowed to be changed to a new amount only during a predefined time preceding the date of the transfer.

5. The method of claim 1 **characterized in that** in case the execution step (104) is not successful, allowing to input an amount to execute an overdue standing order iteration leaving the default amount of the standing order unaltered.

6. The method of claim 1 **characterized in that** the step of allowing (103) to change the default amount of the standing order to a new amount accepts the amount to be transferred as a formula.

7. The method of claim 1 **characterized in that** by further defining a description formula for the standing order, the description formula comprising a variable which can be updated upon executing the standing order.

8. A system for management of standing orders the system comprising
- an internal data bus (504);
- a local memory (508) for storing software and data;
- a processor (507) configured to execute the method of claim1 and:
- communicating with a standing orders database (505) in order to create, modify, executed and archive data of standing orders;
- communicating with a clock module (510);
- in response to interaction of a client (501), generating, by means of a user interface generation module (506), user interface data.

9. A computer program comprising program code means for performing all the steps of the computer-implemented method according to any of claims 1 - 7 when said program is run on a computer.

10. A computer readable medium storing computer-executable instructions performing all the steps of the computer-implemented method according to any of claims 1 - 7 when executed on a computer.
